# EUROPÄISCHE PATENTSCHRIFT

(11) **EP 1 220 570 B1**
(45) Veröffentlichungstag und Bekanntmachung des Hinweises auf die Patenterteilung: **26.10.2005**
(21) Anmeldenummer: 01710034.8
(22) Anmeldetag: 19.07.2001
(51) Int. Cl.: H05B 3/74, F24C 7/08

(54) **Anordnung zur Steuerung von elektrisch ansteuerbaren Geräten, insbesondere Elektrowärmegeräten**
Controlling device for controlling of electrical apparatus, particularly electrical heating apparatus
Dispositif de commande d'appareils électriques commandables, en particulièr d'appareils de chauffages électriques

(30) Priorität: 21.07.2000 DE 10035592
(43) Veröffentlichungstag der Anmeldung: 03.07.2002
(73) Patentinhaber: E.G.O. ELEKTRO-GERÄTEBAU GmbH, 75038 Oberderdingen (DE)
(72) Erfinder: Gremm, Oliver, 75057 Kürnbach (DE)
(74) Vertreter: Patentanwälte Ruff, Wilhelm, Beier, Dauster & Partner

(56) Entgegenhaltungen:
- EP-A- 0 497 191
- EP-A- 0 600 780
- DE-A- 19 711 781
- US-A- 5 920 131

## Beschreibung

Die Erfindung betrifft eine Anordnung zur Steuerung von elektrisch ansteuerbaren Geräten, insbesondere Elektrowärmegeräten, nach dem Oberbegriff von Anspruch 1.

Bevorzugtes Anwendungsgebiet der Erfindung ist die Steuerung von elektrisch betriebenen Haushaltsgeräten, insbesondere elektrischen Wärme- oder Kochgeräten, beispielsweise elektrischen Kochherden mit einem Glaskeramik-Kochfeld und/oder einem elektrischen Backofen. Gattungsgemäße Steueranordnungen haben mindestens ein an einer Außenseite einer Platte anordenbares oder angeordnetes, manuell betätigbares Bedienelement, das von einer zugeordneten Halteeinrichtung an oder nahe der Platte gehalten wird. Weiterhin ist eine zum Zusammenwirken mit einer Steuereinrichtung des Gerätes vorgesehene Sensoreinrichtung zur Erfassung der Lage und/oder Lageänderung des Bedienelementes vorgesehen. Durch geeignete Bewegung des Bedienelementes kann ein gewünschter Schaltzustand des Gerätes eingestellt werden.

Eine bekannte und sehr häufig eingesetzt Art derartiger Bedienelemente oder Stellglieder sind die bekannten Drehknöpfe, die meist einzeln oder als Baugruppe zusammengefaßt an einer Frontplatte des Herdes o. dgl. unterhalb des üblichen Arbeitsniveaus angeordnet sind. Der Einbau der Drehknöpfe mit entsprechenden mechanischen Halteeinrichtungen erfordert in der Regel viel Platz sowie in den meisten Fällen Durchbrechungen in der Platte, durch die Verschmutzungen in das Geräteinnere eindringen können. Es ist auch schon vorgeschlagen worden, Drehknöpfe auf der Geräteoberseite anzubringen. Die EP 0 797 222 zeigt hierzu eine besonders für die Anbringung auf Glaskeramikplatten geeignete Ausführung, bei der die Drehknöpfe mittels eines an der Unterseite der Glaskeramikplatte angeordneten Haltemagneten durch die Platte hindurch magnetisch gehaltert werden. Die Platte braucht in diesem Fall keine Öffnungen oder Durchbrechungen zu haben. Die Haltekraft wird dadurch wirksam, daß das Bedienelement mindestens ein Teil aus ferromagnetischem Material oder ebenfalls einem Magneten aufweist. Sofern das Bedienelement mindestens einen Magneten aufweist, können die bei Drehen des Bedienelementes auftretenden Magnetfeldveränderungen mit mindestens zwei magnetfeldsensitiven Sensoren erfaßt und zur Steuerung des Gerätes ausgewertet werden. Derartige Steueranordnungen haben sich in der Praxis bewährt.

Die US-A-5 920 131 offenbart ein Drehelement zur Bedienung eines Elektrogerätes. Ein unter einer Abdeckung angebrachter Haltemagnet hält das Bedienelement oberhalb der Abdeckung an der gewünschten Position. Das Bedienelement selbst weist einen eigenen oberen Magneten auf, der zum Festhalten in der gewünschten Position mit dem unteren Magneten zusammenwirkt und eine magnetische Halterung bewirkt. Eine Feststellung der Rotationsbewegung als Bedienbewegung erfolgt über mit dem Bedienelement rotierende Lichtleiter oder Magnete für Magnetfeldsensoren.

Die DE 197 11 781 A beschreibt eine Anordnung zur Erkennung der Bewegung eines unter einer Abdeckung angeordneten Bauteils mit einem Magneten. An einer bestimmten Stelle ist oberhalb der Abdeckung ein Magnetfeldsensor angeordnet, der registriert, wenn unter der Abdeckung ein Magnet mit Polschuhen vorbeibewegt wird. Eine magnetische Haltekraft oder dergleichen wird hier nicht benötigt. Magnetkraft wird lediglich zur ortsgebundenen bzw. positionsgebundenen berührungsfreien Signalübertragung bzw. Sensorauslösung verwendet.

Der Erfindung liegt die Aufgabe zugrunde, eine besonders funktionssichere Steuerungsanordnung zu schaffen, die sich insbesondere durch einfachen Aufbau und geringe Bereitstellungskosten auszeichnet.

Zur Lösung dieser Aufgabe schlägt die Erfindung eine Anordnung mit den Merkmalen von Anspruch 1 vor. Bevorzugte Weiterbildungen sind in den abhängigen Ansprüchen angegeben. Der Wortlaut sämtlicher Ansprüche wird durch Bezugnahme zum Inhalt der Beschreibung gemacht.

Bei erfindungsgemäßen Steueranordnungen hat das Bedienelement mindestens einen Magneten, insbesondere einen Permanentmagneten geeigneter Dimensionierung. Die Sensoreinrichtung hat mindestens ein als Magnetfeldleiter dienendes Element und mindestens einen zur Abgabe von Sensorsignalen ausgebildeten, magnetfeldsensitiven Sensor, der derart im Bereich des Magnetfeldleiters angeordnet ist, daß durch den Sensor die Lage und/oder Lageänderung des Bedienelementes in Bezug auf den Magnetfeldleiter detektierbar bzw. erfaßbar ist. Die relative Anordnung von Sensor und Magnetfeldleiter ist dabei so, daß ein im Magnetfeldleiter geführtes magnetisches Feld mit geeigneter Stärke auf den Sensor wirken kann, wozu der Sensor normalerweise in unmittelbarer Nähe des Magnetfeldleiters und ggf. in Berührungskontakt mit diesem angebracht sein kann.

Durch die Nutzung mindestens eines geeignet gestalteten und dimensionierten Magnetfeldleiters ist es möglich, den Sensor ggf. auch außerhalb des direkten Wirkungsbereiches des Magneten des Bedienelementes anzuordnen, da die Kopplung zwischen dem an der Plattenaußenseite angeordneten Bedienelementmagneten und dem Sensor im wesentlichen ausschließlich über den Magnetfeldleiter erfolgt. Durch die Nutzung eines zwischengeschalteten Magnetfeldleiters kann auch die Ankopplung zwischen Bedienelementmagnet und Sensor verbessert werden, so daß eine derartige Schalteranordnung empfindlicher auf Bewegungen des Bedienelementes reagieren kann. Zudem kann durch geeignete Gestaltung und/oder Ausbildung des Magnetfeldleiters ggf. eine besondere Schaltcharakteristik erzeugt werden, die deutlich von einer im wesentlichen vom direkten Abstand zwischen Bedienelementmagnet und Sensor bestimmten Schaltcharakteristik abweichen. Die Zwischenschaltung mindestens eines Magnetfeldleiters zwischen Bedienelementmagnet und Sensor schafft also bzgl. der Sensoranordnung und der durch die Schalteranordnung gegebenen Steuerungsmöglichkeiten zusätzliche Freiheiten.

Der Magnetfeldleiter besteht mindestens teilweise, insbesondere im wesentlichen vollständig aus einem magnetisierbaren Metall, das an der dem Bedienelement abgewandten Innenseite der Platte in direktem Berührungskontakt mit dieser oder im vorzugsweise geringen Abstand zur Platte angeordnet sein kann. Metallische Magnetfeldleiter sind in beliebigen geeigneten Formen und Größen kostengünstig herstellbar. Der Magnetfeldleiter ist so dimensioniert und angeordnet, daß er im Zusammenwirken mit dem Magneten des Bedienelementes das Bedienelement magnetisch und berührungsfrei an der Platte hält. Der Magnetfeldleiter hat also eine Doppelfunktion, indem er nicht nur der magnetischen Kopplung zwischen Bedienelementmagnet und Sensor dient, sondern auch als Halteelement einer Halteeinrichtung, die magnetisch berührungslos durch die Platte auf das Bedienelement wirkt. Dadurch wird es insbesondere auch möglich, das Bedienelement ohne Zuhilfenahme von Werkzeugen von der Platte zu entfernen bzw. an der Platte anzubringen. Hierdurch kann die Betriebssicherheit des gesteuerten Gerätes verbessert werden, indem das Bedienelement beispielsweise zur Sicherung gegen unbefugtes Betätigen durch Kinder bei Mißbrauch des Gerätes abgenommen wird. Es kann auch alternativ oder zusätzlich eine mechanische Halteeinrichtung vorgesehen sein.

Der Magnetfeldleiter kann jede geeignete Form annehmen, die eine zuverlässige Ankopplung zwischen dem Bewegungsbereich des Betätigungselementes und dem mindestens einen Sensor schafft. Vorzugsweise ist der Magnetfeldleiter ein langgestrecktes Element mit zwei Enden, wobei vorzugsweise mindestens ein Sensor an einem Ende (weiter auf S. 5 der ursprünglichen Beschreibung) bzw. dem Ende gegenüberliegend angeordnet ist. Der Endbereich kann so ausgestaltet sein, daß ein guter Übertritt des im Magnetfeldleiter geführten Magnetfeldes zum Sensor gewährleistet ist. In diesem Fall kann die Magnetfeldstärke am Ort des Sensors eine einfache, mehr oder weniger lineare oder kontinuierliche Funktion der Position des Bedienelementmagneten bzgl. der Längsachse bzw. Längsrichtung des Magnetfeldleiters sein. Insbesondere kann es ausreichen, wenn die Sensoreinrichtung nur einen einzigen Sensor aufweist, der beispielsweise an oder in unmittelbarer Nähe eines Endes eines als Magnetfeldleiter dienenden Metallstreifens o. dgl. angeordnet ist. Derartige Anordnung können aufgrund der geringen Anzahl benötigter Bauelemente besonders kostengünstig sein. Es ist aber beispielsweise auch möglich, an beiden Enden eines langgestreckten Magnetfeldleiters Sensoren anzubringen, wobei dann bei Längsverschiebung des Bedienelementmagneten entlang des Magnetfeldleiters die Magnetfeldstärke an einem Sensor steigt, während sie am anderen Sensor entsprechend fällt. Die Sensorsignale können getrennt oder gemeinsam ausgewertet werden.

Die Nutzung eines langgestreckten Magnetfeldleiters, der insbesondere im wesentlichen parallel zu der das Bedienelement tragenden Platte angeordnet sein kann, ermöglicht unterschiedliche Bedienelementkonzepte. Beispielsweise kann das Bedienelement nach Art eines Schiebers ausgebildet und bedienbar sein. Hierzu kann der Magnetfeldleiter geradlinig langgestreckt sein, beispielsweise in Form eines geraden Metallstreifens. Es ist auch möglich, daß das Bedienelement nach Art eines Drehknopfes oder Drehknebels ausgebildet und bedienbar ist. In diesem Fall kann der Bedienelementmagnet exzentrisch zur Drehachse des Bedienelementes angeordnet sein und der entsprechende Magnetfeldleiter derart kreisbogenförmig gekrümmt sein, daß durch Drehung des Bedienelementes um seine Drehachse der Bedienelementmagnet entlang des Magnetfeldleiters bewegt wird. Auch hier kann ein einziger, an einem Ende eines kreisbogenförmig gekrümmten, aber nicht vollständig kreisförmig geschlossenen Magnetfeldleiters ausreichen, um für die Stellung und/oder Drehrichtung des Bedienelementes eindeutige Sensorsignale zu erzeugen.

Bei einer bevorzugten Weiterbildung ist vorgesehen, daß der Magnetfeldleiter derart ausgebildet ist, daß eine kontinuierliche Bewegung des Bedienelementmagneten entlang des Magnetfeldleiters im Bereich des Sensors eine im wesentlichen diskontinuierliche und/oder gerasterte und/oder stufige Änderung der Magnetfeldstärke bewirkt. Es kann erreicht werden, daß im Bereich des Sensors im wesentlichen nur Magnetfeldstärken auftreten, die innerhalb gewisser, gut voneinander unterscheidbarer Bereiche liegen. Dadurch kann eine Rasterung der auf den Sensor wirkenden Magnetfeldstärken erreicht werden, die besonders einfach in eine von herkömmlichen Haushaltsgeräten bekannte stufenweise Umschaltung zwischen verschiedenen Betriebszuständen umsetzbar ist.

Gemäß einer Weiterbildung ist es auch möglich, daß die Halteeinrichtung derart ausgebildet ist, daß entlang des Bewegungsweges des Bedienelementmagneten mehrere in vorzugsweise gleichem Abstand zueinander liegende Vorzugsstellungen einstellbar sind. Es kann also eine magnetisch erzeugte Verrastung geschaffen werden, die dazu führt, daß das bewegte, also linear geschobene oder gedrehte Bedienelement nach Loslassen in einer durch die Vorzugsstellung definierten Position stehen bleibt. Dieser Rasteffekt kann beispielsweise dadurch erzielt werden, daß der Magnetfeldleiter und/oder das Halteelement der Halteeinrichtung eine Wellenform hat. Dadurch ergeben sich bei makroskopisch etwa paralleler Anordnung zur Platte in gewissem Abstand zueinander Bereiche mit kleinerem Abstand zur Platte bzw. zum Bedienelement, die von Bereichen mit größerem Abstand getrennt sind. Die magnetisch festgelegten Vorzugsstellungen liegen dann in den Bereichen mit kleinerem Abstand zur Platte, weil dort die Haltekraft aufgrund des geringeren Abstands zum Bedienelementmagneten jeweils am größten ist. Gleichzeitig ist in den Bereichen kleineren Abstandes auch die Einkopplung des Magnetfeldes zwischen Bedienelementmagnet und Magnetfeldleiter besonders wirksam, so daß sich im Bereich von Wellenbergen auch lokale Maxima der Magnetfeldstärke am Sensor ergeben können.

Um für die Bewegung des Bedienelementes einen bzgl. seiner Lage eindeutig definierten Nullpunkt zu schaffen, der beispielsweise einer Aus-Stellung des Elektrogerätes entspricht, ist bei einer bevorzugten Ausführungsform vorgesehen, daß die Halteeinrichtung mindestens einen Magneten, insbesondere Permanentmagneten, zur Festlegung dieser Vorzugs-Ruhestellung aufweist. Der Magnet kann sich insbesondere im Bereich eines Endes des Magnetfeldleiters befinden, vorzugsweise an dem dem Sensor gegenüberliegenden Ende. Alternativ oder zusätzlich kann auch der Endpunkt einer Verstellbewegung durch einen derartigen Magneten definiert sein. Die für die Festlegung von Ruhepositionen des Bedienelementes verwendeten Magnete können durch Dimensionierung und/oder Polung so ausgebildet sein, daß die von ihnen ausgeübte Haltekraft auf das Bedienelement bzw. den Bedienelementmagneten deutlich stärker ist als diejenige Haltekraft, die während einer Bewegung entlang des Magnetfeldleiters auf das Bedienelement wirkt.

Wie erwähnt, können die bei der Bewegung des Bedienelementes auftretenden Magnetfeldveränderungen durch mindestens einen magnetfeldsensitiven Sensor erfaßt werden. Bevorzugt sind hier Hallsensoren und/oder GMR-Widerstände, die in Abhängigkeit von der auf den Sensor einwirkenden Magnetfeldstärke ein einfach und zuverlässig elektronisch auswertbares Spannungssignal liefern. Ein magnetfeldsensitiver Sensor kann auch mindestens eine Spule oder mindestens ein Element mit normalem magnetoresistivem Effekt aufweisen.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte Ausführungen darstellen können.

Ausführungsbeispiele der Erfindung sind in den Zeichnungen dargestellt und werden im folgenden näher erläutert. In den Zeichnungen zeigen:
- Fig. 1: einen schematischen Vertikalschnitt durch eine Ausführungsform einer erfindungsgemäßen Steueranordnung, die an einer Glaskeramikplatte eines Kochherdes mit Glaskeramik-Kochfeld angebracht ist,
- Fig. 2: einen schematischen Vertikalschnitt durch eine andere, an einem Glaskeramik-Kochfeld angebrachte Steueranordnung mit magnetischer Rasterung,
- Fig. 3: eine stark schematisierte Draufsicht auf die Schieberanordnung gemäß Fig. 2 und
- Fig. 4: eine stark schematische Draufsicht auf eine Ausführungsform einer Steueranordnung mit drehbarem Bedienelement und kreisbogenförmig gekrümmtem Magnetfeldleiter.

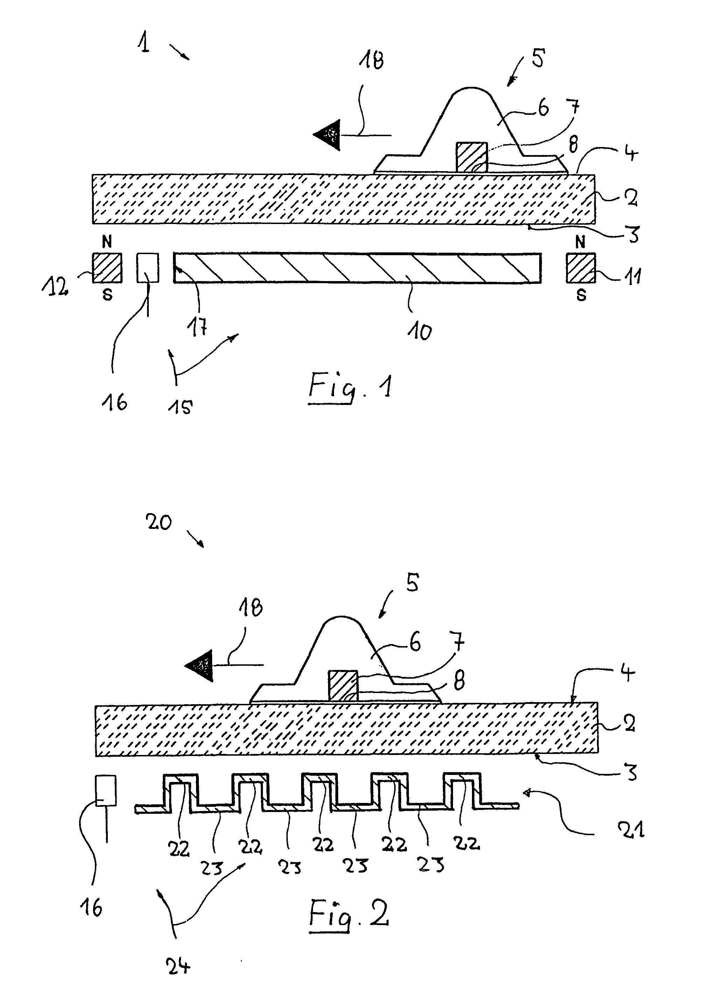

Der schematische Vertikalschnitt in Fig. 1 zeigt eine Steueranordnung 1 zur Steuerung eines elektrischen Kochherdes, dessen Oberseite bzw. Arbeitsfläche durch eine horizontale Glaskeramikplatte 2 definiert wird, die eine einzige oder mehrere im Abstand voneinander liegende Kochstellen aufweisen kann. Die für die einzelnen Kochstellen vorgesehenen, insbesondere als Strahlungsheizkörper ausgebildeten Beheizungen sind an der Innenseite bzw. Unterseite 3 der Platte 2 angeordnet und geben ihre Heizstrahlung durch die Platte hindurch an deren Außenseite bzw. Oberseite 4 ab, auf die Kochgefäße gestellt werden können. An der Oberseite der von einem gesonderten Rahmen umgebenen, durchgehend ebenen und konstant dicken Glaskeramikplatte sind in einer Reihe benachbart zueinander bzw. nebeneinander mehrere manuell betätigbare Bedienelemente angeordnet, mit denen die einzelnen Beheizungen unabhängig voneinander manuell gesteuert, beispielsweise ein- und ausgeschaltet sowie auf unterschiedliche Betriebsleistungen eingestellt werden können. Das in der Zeichnungsfigur dargestellte Bedienelement 5 ist eines von beispielsweise vier bis zehn zwischen den Kochfeldern und einer Außenkante der Platte unmittelbar benachbart zueinander in einer Reihe parallel zur Außenkante angeordneten Bedienelementen.

Das Bedienelement 5 ist als geradlinig verschiebbarer Flachschieber ausgebildet und hat eine Höhe, die nur wenig größer als die Dicke der Glaskeramikplatte 2 ist. Es ist sehr einfach aufgebaut und besteht im wesentlichen aus zwei Teilen, nämlich einem eine bodenseitige Rechteckausnehmung aufweisenden Kunststoffkörper 6 und einem in die Rechteckausnehmung paßgenau eingesetzten, quaderförmigen Permanentmagneten 7, der bündig mit der ebenen Unterseite 8 des Kunststoffkörpers bzw. des Bedienelementes abschließt. Der Bedienelementmagnet 7 ist so ausgerichtet, daß sein magnetischer Südpol der Unterseite 8 bzw., bei aufgesetztem Betätigungselement, der Platte 2 zugewandt ist und seine zum Nordpol führende magnetische Achse im wesentlichen senkrecht zur Unterseite 8 verläuft. Es kann sich um einen Permanentmagneten mit hoher Koerzitivfeldstärke, beispielsweise um einen Eisen-Neodyn-Bor-Permanentmagneten handeln.

Die Plattenoberseite 4 ist eben und frei von Vorsprüngen oder Vertiefungen, die eine mechanische Führung oder Bewegungsbegrenzung des frei verschieblichen Bedienelementes 5 parallel zur Plattenoberfläche bewirken könnten.

Unterhalb der Glaskeramikplatte 2 befindet sich in einem durch diese und weitere, nicht gezeigte Teile hermetisch abgeschlossenen Raum ein gerader Metallstab 10 aus einem magnetisierbaren, beispielsweise eisenhaltigen Metall. Der Metallstab 10 ist mit seiner Längsachse parallel zur Glaskeramikplatte 2 ausgerichtet, ist in der gezeigten Darstellung mit geringem Abstand von der Unterseite 3 der Platte 2 angeordnet und kann bei anderen Ausführungsformen auch direkt an der Plattenunterseite 3 anliegen. Er ist durch eine geeignete Befestigung in der gewünschten Lage relativ zur Platte 2 fixiert und kann beispielsweise auf einer (nicht gezeigten) Leiterplatte befestigt sein, die im Raum unterhalb der Glaskeramikplatte 2 befestigt ist und die elektronischen Bauteile einer elektronischen Steuereinrichtung für das Elektrogerät trägt.

Der Metallstab 10 ist bei auf die Plattenoberfläche 4 aufgesetztem Bedienelement 5 derart im Wirkbereich des Bedienelementmagneten 5 angeordnet und derart dimensioniert, daß die durch die Platte 2 hindurchwirkenden, magnetischen Anziehungskräfte zwischen dem Bedienelementmagneten 7 und dem Metallstab 10 das an die Plattenaußenseite aufgesetzte Bedienelement festhalten und führen, wobei allerdings ein Abheben des Bedienelementes von der Plattenoberfläche unter Überwindung der magnetischen Anziehungskräfte möglich ist. Der Metallstab 10 dient somit als Halteelement und Führungselement einer Halteeinrichtung, die berührungslos durch die Platte 2 hindurch auf das Betätigungselement 5 wirkt, wobei das Bedienelement 5 ohne Zuhilfenahme von Werkzeugen von der Platte 2 entfernbar ist. Aufgrund dieser ausschließlich magnetischen Halterung und Führung kann eine mechanische Halterung des Bedienelementes 5 auf der Platte entfallen. Insbesondere sind im Gegensatz zu mechanischen Halterungen keine Öffnungen oder Durchbrüche an der Platte 2 erforderlich, durch die Verschmutzungen in dem Bereich unterhalb der Platte 2 eindringen können. Durch die Längserstreckung des im Querschnitt beispielsweise rechteckigen Metallstabes 10 wirkt auf das Bedienelement 5 bei dessen Verschiebung parallel zum Metallstab 10 unabhängig von der Verschiebeposition immer im wesentlichen die gleiche Haltekraft in Richtung Glaskeramikplatte. Damit ist eine stufenlose Verschiebung realisierbar, bei das Bedienelement an jeder beliebigen Position längs des Metallstabes 10 stehen bleibt, wenn es losgelassen wird. Seitliche Bedienelementverschiebungen werden dabei mittels Magnetkraft automatisch rückgängig gemacht.

Zur ausschließlich magnetischen Festlegung eines definierten Verschiebungsnullpunktes sowie eines definierten Verschiebungsendpunktes sind in Verlängerung des Metallstabes 10 ein in Fig. 1 rechts erkennbarer Nullpunktsmagnet 11 und ein mit Abstand vom gegenüberliegenden Ende des Metallstabes angeordneter Endpunktmagnet 12 vorgesehen, deren magnetische Nordpole jeweils zur Plattenunterseite 3 gerichtet sind. Bei geeigneter Dimensionierung und Feldstärke dieser Magnete wird durch sie auf das Bedienelement bzw. dessen Magneten 7 eine Anziehungskraft ausgeübt, die deutlich stärker ist als diejenige zwischen Bedienelementmagnet 7 und dem nicht-permanentmagnetischen Metallstab 10. Hierdurch ergeben sich in beiden Endbereichen des Metallstabes 10 Vorzugs- bzw. Ruhepositionen für den Schieber 5. Diese können jederzeit einer vom Ausschaltzustand abweichenden Bereitschaftsstellung des Gerätes entsprechen.

Es ist zu erkennen, daß sowohl für das Festhalten des Bedienelementes an der Platte, als auch für dessen Führung entlang der Platte ausschließlich berührungsfrei wirkende magnetische Mittel eingesetzt werden.

Zur Erfassung der Lage und/oder einer Lageänderung des Bedienelementes 5 ist eine mit einer nicht gezeigten Steuereinrichtung des Kochherdes zusammenarbeitende Sensoreinrichtung 15 vorgesehen. Diese umfaßt einen einzigen magnetfeldsensitiven Sensor 16, der an eine Auswerte- und Steuerschaltung angeschlossen ist und im Einbauzustand in unmittelbarer Nähe einer Stirnseite 17 des Metallstabes 10 in Verlängerung der Längsachse des Metallstabes angeordnet ist. Abweichend von der schematischen Darstellung kann der Sensor 16 auch mit Berührungskontakt zum Metallstab 10 direkt an diesen anliegend angeordnet sein. Der Sensor 16 weist mindestens einen GMR (Giant Magneto Resistance)-Widerstand auf, nutzt also den sogenannten magnetresisitiven Effekt aus, der darauf beruht, daß bei Einwirken eines Magnetfeldes auf den Magnetfeldsensor dessen elektrischer Widerstand signifikant verändert wird. Auch Sensoren unter Nutzung des normalen Magnetwiderstandseffektes oder Hallsensoren sowie andere, auf Magnetfeldveränderungen ansprechende Sensoren, beispielsweise mit Spulen, sind möglich.

Eine Besonderheit liegt nun darin, daß der Sensor 16 derart nahe am Ende 17 des Metallstabes 10 angeordnet ist, daß eine gute Einkopplung eines im Stab 10 wirksamen Magnetfeldes in den Sensor 16 gegeben ist. Im Rahmen der Sensoreinrichtung wirkt der Metallstab 10 als Magnetfeldleiter, der eine zuverlässige Ankopplung des vom Bedienelementmagneten 7 ausgehenden Magnetfeldes an den Sensor 16 schafft. Die Arbeitsweise der Steueranordnung ist dabei generell so, daß sich am Ort des Sensors 16 die Magnetfeldstärke in charakteristischer Weise ändert, wenn der Schieber 5 parallel zur Verschiebungsrichtung 18 bzw. parallel zum Metallstab 10 auf der Platte 2 verschoben wird. Dabei wird generell die Feldstärke am Sensor 16 zunehmen, je weiter das Bedienelement 5 Richtung Sensor verschoben wird, wobei jeder Position des auf die Platte 2 aufgesetzten Bedienelementes entlang des Magnetfeldleiters 10 eine charakteristische Feldstärke am Ort des Sensors zugeordnet ist. Diese kann mit Hilfe des Sensors 16 in ein einfach elektronisch auswertbares Spannungssignal umgesetzt werden.

Alternativ zur Einstellung eines bestimmten Betriebszustandes durch Verschiebung des Bedienelementes ist es auch möglich, durch Aufsetzen des Bedienelementes an einer bestimmten Stelle entlang des Magnetfeldleiters 10 eine gewünschte Kochstufe oder Kochstelle direkt einzustellen. Hierzu kann die Auswertung des Sensorsignals beispielsweise so erfolgen, daß das Elektrogerät bei abgenommenem Bedienelement bzw. minimaler Magnetfeldstärke am Sensor automatisch in einen Ausschaltzustand geschaltet wird und bei Überschreiten eines Schwellwertes für die Magnetfeldstärke beim Aufsetzen des Bedienelementes automatisch eingeschaltet wird. Entsprechend kann die Wegnahme des Bedienelementes von der Platte zum vollständigen Abschalten der Kochstelle genutzt werden, und zwar unabhängig von der aktuellen Längsposition des Bedienelementes entlang eines Verschiebeweges.

Bei dem anhand von Fig. 1 beispielhaft erläuterten Arbeitsprinzip erfindungsgemäßer Schaltungsanordnungen benötigt ein Schaltungssystem also nur einen Magneten, nämlich den als Magnetfeldgeber dienenden Bedienelementmagnet 7, sowie nur einen einzigen geeigneten Sensor 16, um sämtliche für die Steuerung beispielsweise eines Herdes erforderlichen Steuerfunktionen zu ermöglichen. Derartige Steueranordnungen können daher besonders einfach aufgebaut und kostengünstig bereitgestellt werden. Zudem ist zur magnetischen Halterung und Führung des Bedienelementes auf Seiten des zu steuernden Gerätes nur ein kostengünstig bereitstellbares, geeignetes Metallstück, beispielsweise nach Art des Metallstabes 10, erforderlich, das ebenfalls kostengünstig bereitstellbar ist. Geräteseitige Magneten nach Art des Nullpunkt- und des Endpunktmagneten 11 bzw. 12 können für die Bedienungsfreundlichkeit vorteilhaft sein, sind jedoch für die Grundfunktion entbehrlich.

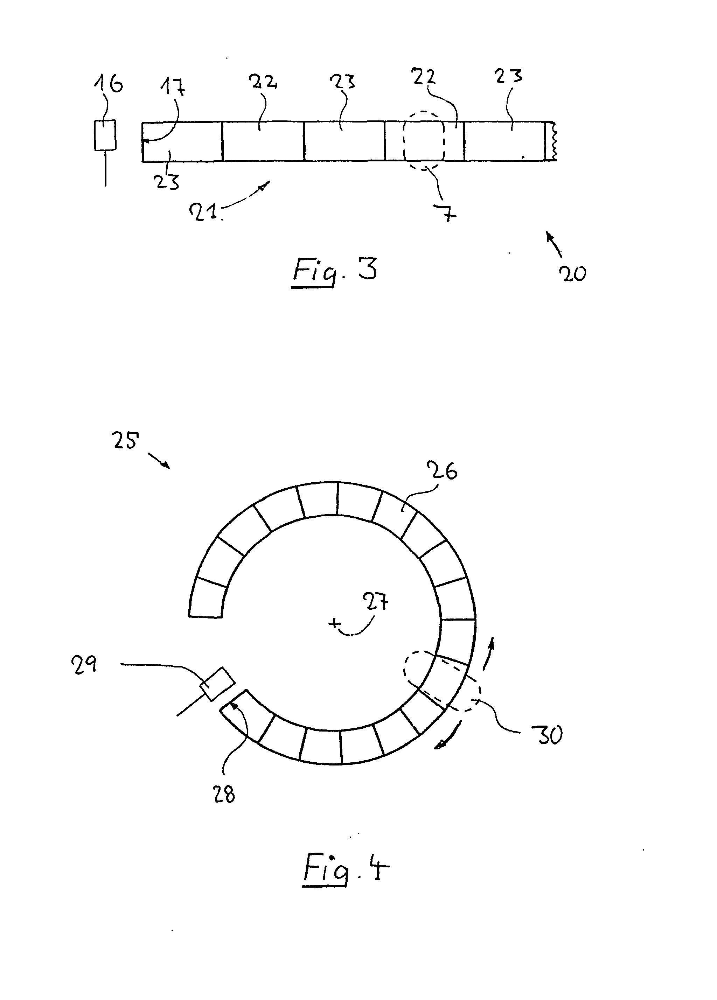

Bei der anhand von Fig. 2 erläuterten Ausführungsform einer Schaltungsanordnung 20 werden aus Gründen der Übersichtlichkeit gleiche bzw. gleich wirkende Bauteile mit den gleichen Bezugszeichen bezeichnet wie in Fig. 1. Ein Unterschied zur Ausführungsform gemäß Fig. 1 besteht darin, daß hier die Magneten 11 und 12 zur Definition von endseitigen Ruhestellungen entlang des Verschiebeweges weggelassen sind. Ein wesentlicher Unterschied liegt in der Formgebung des als Halteelement und Magnetfeldleiter dienenden Metallteiles 21 aus magnetisierbarem bzw. magnetfeldleitendem Metall. Der Metallstreifen 21 hat bei dieser Ausführungsform eine Wellenform, die im gezeigten Beispiel nach Art einer Rechteckwelle ausgebildet ist, bei anderen Ausführungsformen aber auch kontinuierlich gekrümmt, beispielsweise nach Art einer Sinuswelle ausgebildet sein kann. Durch die wellenartige Formgebung in Verbindung mit der generell parallel zur Platte 2 verlaufenden Ausrichtung des Gesamtelementes wird erreicht, daß das Element 21 eine gewisse Anzahl von beispielsweise fünf Abschnitten 22 hat, die in Längsrichtung des Elementes 21 in regelmäßigen Abständen zueinander angeordnet sind und die näher an der Platte 2 liegen als dazwischen liegende Abschnitte 23 des Metallelementes 21. Die "Amplitude" der Wellenform ist dabei so groß, daß sowohl die magnetische Anziehungskraft zwischen Bedienelementmagnet 7 und Metallkörper 21, als auch die Einkopplung des vom Bedienelementmagneten 7 ausgehenden Magnetfeldes in die Magnetfeldlage 21 im Bereich der näher an der Platte liegenden Abschnitte 22 deutlich stärker bzw. größer ist als im Bereich der entfernten Abschnitte 23. Dadurch kann bzgl. der Haltekraft eine magnetische Rastung realisiert werden, bei der sich bei den näher an der Platte liegende Abschnitten 22, also im Bereich höherer Haltekräfte, Vorzugstellungen für die Bedienelement 5 ergeben, die in einen gewissen Rasterabstand entsprechend dem Axialabstand benachbarter Nahabschnitte 22 liegen. Wird das Bedienelement dagegen in einen Bereich verschoben, bei der der Bedienelementmagnet 7 gegenüber einem entfernten Abschnitt 23 liegt, so ist die Haltekraft deutlich herabgesetzt und der Schieber 5 zeigt die Tendenz, sich selbsttätig in eine solche Stellung einzustellen, bei der der Abstand zwischen Bedienelementmagnet 7 und Halteelementabschnitt 22 minimal wird. Eine derartige Vorzugstellung, bei der das Bedienelement "magnetisch einrastet", ist in der Draufsicht in Fig. 3 stark schematisch gezeigt.

Die Wellenform des Elementes 21 wirkt sich auch auf die Arbeitscharakteristik der den Sensor 16 sowie den Magnetfeldleiter 21 umfassenden Sensoreinrichtung 24 aus. Dabei ist es so, daß die Einkopplung des vom Bedienelementmagneten 7 ausgehenden Magnetfeldes in den Magnetfeldleiter 21 dann besonders stark bzw. ausgeprägt ist, wenn der Bedienelementmagnet jeweils seinen minimalen Abstand zum Magnetfeldleiter 21 hat, während die Einkopplung in den dazwischen liegenden Schieberstellungen, bei denen der Bedienelementmagnet gegenüber den weiter von ihm entfernten Abschnitten 23 des Magnetfeldleiters liegt, signifikant geringer sein kann. Dadurch ergibt sich bei einer kontinuierlichen Bewegung des Bedienelementes entlang des Magnetfeldleiters im Bereich des Sensors 16 eine Magnetfeldänderung, bei der sich mehrere Effekte überlagern. Dies sind insbesondere der Absolutabstandseffekt zwischen der Position des Schiebers 5 und dem Sensor 16 sowie der durch den entlang des Verschiebeweges periodisch variierenden Abstand zwischen Magnetfeldleiter 21 und Bedienelement bewirkte Rastungseffekt. Als Resultat ergibt sich am Ort des Sensors 16 eine Magnetfeldstärkeänderung, bei der einer generell aufsteigenden bzw. absteigenden Tendenz eien gewisse Diskontinuität oder Stufung bzw. Rasterung überlagert ist. Dadurch ergeben sich in Abhängigkeit vom Verschiebeweg verschiedene Magnetfeldstärkestufen bzw. -niveaus, die bei entsprechender Auswertung gut voneinander zu unterscheiden sind, so daß beispielsweise jedem Nahabschnitt 22 des Elementes 21 eine vordefinierte Schaltstufe einer Beheizungsleistung zugeordnet sein kann.

Anhand eines Vergleiches der stark schematisierten Darstellungen in Fig. 3 und 4 ist erkennbar, daß die Erfindung nicht nur bei linear bzw. geradlinig verschiebbaren Schieberanordnungen nutzbar ist, sondern auch bei solchen Steueranordnungen, bei denen das Bedienelement ein Drehknopf oder Drehknebel ist. Hierzu zeigt Fig. 4 einen Teil einer Steueranordnung 25, bei der der Magnetfeldleiter 26 um eine Zentralachse 27 (senkrecht zur Platte 2) kreisbogenförmig gekrümmt ist und einen Umfangswinkel von weniger als 360°, z.B. ca. 320° umfaßt. In unmittelbarer Nähe bzw. direkt angrenzend an ein Umfangsende 28 ist ein magnetfeldempfindlicher Sensor 29 angeordnet. Die Sensoreinrichtung 25 ist, genau wie diejenigen Figuren 1 und 2, direkt unterhalb bzw. in geringem Abstand zur Unterseite einer Glaskeramikplatte angeordnet. Das zugehörige Bedienelement kann auf die Glaskeramikplatte aufgesetzt werden, ist als ein um die Achse 27 drehbarer Drehknebel ausgebildet und hat einen in Fig. 4 gestrichelt angedeuteten, exzentrisch zur Achse 27 angeordneten Bedienelementmagneten 30, dessen Radialabstand von der Knebelachse 27 etwa dem Radius des Magnetfeldleiters 26 entspricht. Dadurch wird erreicht, daß bei Drehung des Knebels der Bedienelementmagnet 30 in Längsrichtung des Magnetfeldleiters 26 entlang dessen (kreisbogenförmig gekrümmter) Längsachse entlanggeführt wird. Dabei ändert sich die Magnetfeldstärke am Ort des Sensors 29 im wesentlichen proportional zum in Umfangsrichtung des Magnetfeldleiters gemessenen Abstand zwischen Bedienelementmagnet 30 und Sensor 29, wobei dieser Abstandsabhängigkeit, wie bei der Ausführungsform gemäß Fig. 2, bei welliger Ausbildung des Magnetfeldleiters 26 eine gewisse Rasterung oder Stufung überlagert sein kann.

Die Halterung des Drehknebels an der Platte kann auch bei dieser Ausführungsform ausschließlich über magnetische Anziehungskräfte erfolgen. Es ist jedoch auch möglich, eine derartige Sensoreinrichtung in Verbindung mit einem mechanisch gehaltenen Drehknebel zu nutzen, der beispielsweise auf eine im Bereich der Achse 27 durch die Platte hindurchgeführte Drehwelle aufgesetzt ist. Entsprechend ist auch bei den Schieberausführungen der Figuren 1 bis 3 anstatt einer magnetischen Halterung oder zusätzlich dazu auch eine mechanische Halterung und Führung des Bedienelementes 5 möglich.

## Patentansprüche

1. Steueranordnung zur Steuerung von elektrisch ansteuerbaren Geräten, insbesondere Elektrowärmegeräten, mit mindestens einem an einer Außenseite einer Platte (2) angeordneten oder anordenbaren Bedienelement (5), einer dem Bedienelement zugeordneten Halteeinrichtung zum Halten des Bedienelementes an der Platte und einer zum Zusammenwirken mit einer Steuereinrichtung vorgesehenen Sensoreinrichtung zur Erfassung der Lage und/oder Lageänderung des Bedienelementes, wobei das Bedienelement (5) mindestens einen Bedienelementmagneten (7; 30) aufweist und die Sensoreinrichtung mindestens einen Magnetfeldleiter (10; 21; 26) und mindestens einen magnetfeldsensitiven Sensor (16; 29), der derart im Bereich des Magnetfeldleiters angeordnet ist, daß durch den Sensor die Lage und/oder Lageänderung des Bedienelementes (5) in Bezug auf den Magnetfeldleiter detektierbar ist, **dadurch gekennzeichnet, daß** die Halteeinrichtung mittels eines Kraftfeldes berührungslos durch die Platte (2) auf das Bedienelement (5) wirkt, wobei die Halteeinrichtung mindestens ein an der Innenseite der Platte (2) angeordnetes Halteelement (10; 21; 26) aus magnetisierbarem Metall aufweist, das derart dimensioniert und angeordnet ist, daß es im Zusammenwirken mit dem Bedienelementmagneten (7; 30) das Bedienelement an der Platte hält, wobei der Magnetfeldleiter (10; 21; 26) als Halteelement der Halteeinrichtung ausgebildet ist.

2. Steueranordnung nach Anspruch 1, **dadurch gekennzeichnet, daß** der Magnetfeldleiter (21; 26) und/oder ein Halteelement (21; 26) der Halteeinrichtung eine Wellenform hat, wobei vorzugsweise der Magnetfeldleiter (10; 21; 26) im wesentlichen vollständig aus einem magnetisierbaren Metall besteht.

3. Steueranordnung nach Anspruch 1 oder 2, **dadurch gekennzeichnet, daß** der Magnetfeldleiter (10; 21; 26) ein langgestrecktes Element mit zwei Enden ist, wobei vorzugsweise mindestens ein Sensor (16; 29) im Bereich eines Endes (17; 28) des Magnetfeldleiters angeordnet ist.

4. Steueranordnung nach einem der vorhergehenden Ansprüche, **dadurch gekennzeichnet, daß** die Sensoreinrichtung nur einen einzigen Sensor (16; 29) aufweist.

5. Steueranordnung nach einem der vorhergehenden Ansprüche, **dadurch gekennzeichnet, daß** das Bedienelement (5) als geradlinig verschiebbarer Schieber ausgebildet ist und/oder daß der Magnetfeldleiter (10; 21) im wesentlichen geradlinig ausgebildet ist.

6. Steueranordnung nach einem der Ansprüche 1 bis 4, **dadurch gekennzeichnet, daß** das Bedienelement als Drehknopf ausgebildet ist und/oder daß der Magnetfeldleiter (26) kreisbogenförmig gekrümmt ist.

7. Steueranordnung nach einem der vorhergehenden Ansprüche, **dadurch gekennzeichnet, daß** die Halteeinrichtung derart ausgebildet ist, daß entlang eines Bewegungsweges des Bedienelementmagneten (7; 30) mehrere in vorzugsweise gleichem Abstand zueinander liegende Vorzugsstellungen einstellbar sind, wobei vorzugsweise eine magnetische Verrastung des Bedienelementes vorgesehen ist.

8. Steueranordnung nach einem der vorhergehenden Ansprüche, **dadurch gekennzeichnet, daß** der Magnetfeldleiter (21; 26) derart ausgebildet ist, daß eine kontinuierliche Bewegung des Bedienelementmagneten (7; 30) entlang des Magnetfeldleiters im Bereich des Sensors (16; 29) eine ungleichförmige, insbesondere im wesentlichen diskontinuierliche und/oder gerasterte und/oder stufige Änderung der Magnetfeldstärke bewirkt.

9. Steueranordnung nach einem der vorhergehenden Ansprüche, **dadurch gekennzeichnet, daß** die Halteeinrichtung mindestens einen Magneten (11; 12) zur Festlegung einer Ruhestellung, insbesondere einer Nullstellung, des Bedienelementes aufweist, wobei vorzugsweise an mindestens einem Ende des Magnetfeldleiters (10) und/oder eines Halteelementes (10) der Halteeinrichtung ein Magnet (11, 12) angeordnet ist.

10. Steueranordnung nach einem der vorhergehenden Ansprüche, **dadurch gekennzeichnet, daß** die Sensoreinrichtung derart mit einer Steuereinrichtung des Gerätes zusammenwirkt, daß bei Wegnahme des Bedienelementes (5) von der Platte (2) das Gerät in einen stabilen Ausschaltzustand geschaltet wird und/oder daß bei in einer Ruhestellung befindlichen Bedienelement das Gerät in einen vom Ausschaltzustand abweichenden Bereitschaftszustand geschaltet wird, wobei vorzugsweise das Bedienelement (5) ohne Zuhilfenahme von Werkzeugen von der Platte (2) entfernbar ist.

## Claims

1. Control arrangement for the control of electrically operable devices, particularly electric heating devices, with at least one control element (5) placed or placeable on an outside of a plate (2), a holding device associated with the control element for holding the control element on the plate and a sensor device provided for cooperating with a control device for determining the position and/or position change of the control element (5), which has at least one control element magnet (7; 30) and the sensor device has at least one magnetic field conductor (10; 21; 26) and at least one magnetic field-sensitive sensor (16; 29), which is so positioned in the vicinity of the magnetic field conductor that through the sensor it is possible to detect the position and/or position change of the control element (5) with respect to the magnetic field conductor, **characterized in that** the holding device acts by means of a force field in contact-free manner through the plate (2) on the control element (5) and the holding device has at least one holding element (10; 21; 26) made from magnetizable metal and placed on the inside of the plate (2) dimensioned and positioned in such a way that in conjunction with the control element magnet (7; 30) it holds the control element on the plate, the magnetic field conductor (10; 21; 26) being constructed as a holding element of the holding device.

2. Control arrangement according to claim 1, **characterized in that** the magnetic field conductor (21; 26) and/or a holding element (21; 26) of the holding device has a wavy shape and preferably the magnetic field conductor 10; 21; 26) is substantially completely made from a magnetizable metal.

3. Control arrangement according to claim 1 or 2, **characterized in that** the magnetic field conductor (10; 21; 26) is an elongated element with two ends and preferably at least one sensor (16; 29) is located in the vicinity of one end (17; 28) of the magnetic field conductor.

4. Control arrangement according to one of the preceding claims, **characterized in that** the sensor device only has a single sensor (16; 29).

5. Control arrangement according to one of the preceding claims, **characterized in that** the control element (5) is constructed as a linearly displaceable slider and/or **in that** the magnetic field conductor (10; 21) is substantially linear.

6. Control arrangement according to one of the claims 1 to 4, **characterized in that** the control element is constructed as a rotary knob and/or the magnetic field conductor (26) is arcuately curved.

7. Control arrangement according to one of the preceding claims, **characterized in that** the holding device is constructed in such a way that along a movement path of the control element magnet (7; 30) it is possible to set several, preferably equidistantly spaced preferred positions and preferably there is a magnetic locking of the control element.

8. Control arrangement according to one of the preceding claims, **characterized in that** the magnetic field conductor (21; 26) is constructed in such a way that a continuous movement of the control element magnet (7; 30) along the magnetic field conductor in the vicinity of the sensor (16; 29) leads to a non-uniform, particularly substantially discontinuous and/or rastered and/or staggered magnetic field strength change.

9. Control arrangement according to one of the preceding claims, **characterized in that** the holding device has at least one magnet (11; 12) for fixing an inoperative position, particularly a neutral position of the control element and preferably on at least one end of the magnetic field conductor (10) and/or a holding element (10) of the holding device is located a magnet (11; 12).

10. Control arrangement according to one of the preceding claims, **characterized in that** the sensor device cooperates with a control device for the appliance in such a way that on removing the control element (5) from the plate (2) the appliance is switched to a stable off state and/or with the control element in the inoperative position the appliance is switched into a readiness state differing from the off state, the control element (5) preferably being removable from the plate (2) without the aid of tools.

## Revendications

1. Dispositif de commande pour la commande d'appareils à commande électrique, en particulier d'appareils de chauffage électrique, comprenant au moins un élément de commande (5) installé ou pouvant être installé sur une face extérieure d'une plaque (2), un dispositif de support affecté à l'élément de commande pour le support de l'élément de commande contre la plaque et un dispositif de captage prévu pour interagir avec un dispositif de commande et destiné à la saisie de la position et/ou du changement de position de l'élément de commande, l'élément de commande (5) présentant au moins un aimant d'élément de commande (7, 30) et le dispositif de captage présentant au moins un conducteur de champ magnétique (10, 21, 26) et au moins un capteur (16, 29) sensible au champ magnétique et disposé à proximité du conducteur de champ magnétique de façon telle que la position et/ou le changement de position de l'élément de commande (5) par rapport au conducteur de champ magnétique soient détectables par le capteur, **caractérisé en ce que** le dispositif de support agit sans contact sur l'élément de commande (5) par l'intermédiaire de la plaque (2), le dispositif de support présentant au moins un élément de support (10, 21, 26) en métal magnétisable installé sur la face intérieure de la plaque (2), dimensionné et disposé de façon telle qu'il maintienne l'élément de commande contre la plaque en interagissant avec l'aimant de l'élément de commande (7, 30), le conducteur de champ magnétique (10, 21, 26) étant constitué comme élément de support du dispositif de support.

2. Dispositif de commande selon la revendication 1, **caractérisé en ce que** le conducteur de champ magnétique (21, 26) et/ou un élément de support (21, 26) du dispositif de support présentent une forme ondulée, le conducteur de champ magnétique (10, 21, 26) étant de préférence entièrement composé, fondamentalement, de métal magnétisable.

3. Dispositif de commande selon la revendication 1 ou 2, **caractérisé en ce que** le conducteur de champ magnétique (10, 21, 26) est un élément allongé présentant deux extrémités, avec, de préférence, au moins un capteur (16, 29) installé à proximité d'une extrémité (17, 28) du conducteur de champ magnétique.

4. Dispositif de commande selon l'une quelconque des revendications précédentes, **caractérisé en ce que** le dispositif de captage ne présente qu'un seul capteur (16, 29).

5. Dispositif de commande selon l'une quelconque des revendications précédentes, **caractérisé en ce que** l'élément de commande (5) est constitué en poussoir pouvant être poussé en ligne droite et/ou **en ce que** le conducteur de champ magnétique (10, 21) est fondamentalement rectiligne.

6. Dispositif de commande selon l'une quelconque des revendications 1 à 4, **caractérisé en ce que** l'élément de commande est constitué en bouton pivotant et/ou **en ce que** le conducteur de champ magnétique (26) est incurvé en forme d'arc circulaire.

7. Dispositif de commande selon l'une quelconque des revendications précédentes, **caractérisé en ce que** le dispositif de support est constitué de façon telle que plusieurs réglages préférentiels disposés de préférence à égale distance l'un de l'autre le long d'un parcours de l'aimant de l'élément de commande (7, 30) puissent être sélectionnés, un encliquetage magnétique de l'élément de commande étant de préférence prévu.

8. Dispositif de commande selon l'une quelconque des revendications précédentes, **caractérisé en ce que** le conducteur de champ magnétique (21, 26) est constitué de façon telle qu'un mouvement continu de l'aimant de l'élément de commande (7, 30) le long du conducteur de champ magnétique à proximité du capteur (16, 29) provoque une modification irrégulière, en particulier essentiellement discontinue et/ou crantée et/ou échelonnée, de l'intensité du champ magnétique.

9. Dispositif de commande selon l'une quelconque des revendications précédentes, **caractérisé en ce que** le dispositif de support présente au moins un aimant (11, 12) pour la détermination d'une position neutre, en particulier une position zéro de l'élément de commande, un aimant (11, 12) étant installé de préférence à une extrémité au moins du conducteur de champ magnétique (10) et/ou d'un élément de support (10) du dispositif de support.

10. Dispositif de commande selon l'une quelconque des revendications précédentes, **caractérisé en ce que** le dispositif de captage interagit avec un dispositif de commande de l'appareil de façon telle qu'en cas de retrait de l'élément de commande (5) de la plaque (2), l'appareil est commuté en position d'extinction stable et/ou **en ce qu'**au cas où l'élément de commande se trouve en position neutre, l'appareil est commuté dans une position de disponibilité au fonctionnement différente de la position d'extinction, l'élément de commande (5) pouvant de préférence être retiré de la plaque (2) sans l'aide d'outils.
